# FASCICULE DE BREVET EUROPEEN

(11) **EP 1 273 512 B1**
(45) Date de publication et mention de la délivrance du brevet: **26.01.2005**
(21) Numéro de dépôt: 02291372.7
(22) Date de dépôt: 04.06.2002
(51) Int. Cl.: B64C 7/00, F16J 15/02

(54) **Aéronef avec joint de carénage ventral**
Flugzeug mit Flügel-Rumpf-Verkleidungsdichtung
Aircraft with belly fairing seal

(30) Priorité: 06.07.2001 FR 0108982
(43) Date de publication de la demande: 08.01.2003
(73) Titulaire: AIRBUS FRANCE, 31060 Toulouse (FR)
(72) Inventeur: Pauly, Bernard, 31700 Blagnac (FR)
(74) Mandataire: Bonnetat, Christian

(56) Documents cités:
- DE-C- 694 021
- FR-A- 2 789 144
- US-A- 4 034 939

## Description

La présente invention concerne un aéronef à carénage ventral, ainsi qu'un joint pour un tel aéronef.

On sait que certains aéronefs, pourvus d'un fuselage et d'une voilure fixe comprenant deux ailes opposées par rapport audit fuselage, comportent un carénage ventral, généralement saillant, en forme de berceau, qui est fixé à la partie inférieure dudit fuselage au croisement de ce dernier avec ladite voilure pour obturer la case du train d'atterrissage en en augmentant éventuellement le volume vers le bas, et qui possède deux rebords longitudinaux remontant latéralement le long dudit fuselage, lesdits rebords étant pourvus, chacun, d'une ouverture pour le passage de l'aile correspondante. Un tel carénage complète le profil aérodynamique de la zone de croisement et sa forme est adaptée pour minimiser la traînée aérodynamique qu'il engendre.

Dans certains aéronefs connus, le mode de fixation de ce carénage ventral sur le fuselage entraîne la formation d'une fente périphérique autour de chaque aile, entre celle-ci et la périphérie de l'ouverture correspondante dudit carénage. Afin d'obturer ladite fente, on prévoit alors un joint qui est fixé à la périphérie de chaque ouverture et qui comporte une lèvre élastique apte à s'appliquer, par la face interne de son extrémité libre, contre l'aile correspondante.

Or, en vol, à cause de la différence de pression régnant entre intrados (surpression) et extrados (dépression) d'une voilure, il s'établit, entre l'intrados et l'extrados de chaque aile, une circulation d'air à l'intérieur du carénage à travers ladite fente, ce qui provoque, notamment à l'extrados, le décollement de l'extrémité libre de la lèvre élastique dudit joint, par rapport à l'aile correspondante. Il en résulte de nombreux inconvénients.

Tout d'abord, la lèvre élastique du joint se met à vibrer dans une gamme de fréquences parfaitement audible depuis l'intérieur de la cabine, ce qui s'avère gênant pour les passagers. Ces vibrations se transmettent au fuselage et aux éléments qu'il comporte (plancher, support, ...) et provoquent une sollicitation structurale en fatigue desdits éléments. De plus, les vibrations, associées aux efforts aérodynamiques appliqués à ladite lèvre, entraînent une fatigue prématurée de cette dernière, ce qui se traduit par une usure rapide pouvant aller jusqu'à la déchirure de ladite lèvre. Enfin, il résulte de ces vibrations l'apparition d'une traînée aérodynamique parasite.

La présente invention a pour objet de remédier à ces inconvénients.

A cette fin, selon l'invention, un aéronef comportant :
- un fuselage et une voilure fixe comprenant deux ailes opposées par rapport audit fuselage ;
- un carénage ventral en forme de berceau, fixé à la partie inférieure dudit fuselage, au croisement de ce dernier avec ladite voilure et pourvu de deux rebords longitudinaux remontant latéralement le long dudit fuselage, lesdits rebords longitudinaux étant pourvus, chacun, d'une ouverture pour le passage avec jeu de l'aile correspondante de sorte qu'est formée une fente périphérique autour de chaque aile, entre celle-ci et la périphérie de l'ouverture correspondante ; et
- un joint fixé à la périphérie de chaque ouverture pour obturer ladite fente et comportant une lèvre élastique apte à s'appliquer, par la face interne de son extrémité libre, contre l'aile correspondante,
est remarquable en ce que, en regard d'au moins une partie de l'extrados de chaque aile, ladite face interne de l'extrémité libre de ladite lèvre comporte au moins un bossage de butée, apte à maintenir ladite lèvre localement écartée dudit extrados pour ménager une fuite contrôlée de l'air passant à travers ladite fente.

Ainsi, grâce à la présente invention, on engendre une fuite d'air contrôlée, supprimant, ou à tout le moins réduisant fortement, les vibrations de ladite lèvre.

Selon la géométrie du fuselage, de la voilure et du carénage ventral de l'aéronef, le coefficient de pression sur certaines parties de l'extrados des ailes peut être très négatif, ce qui est représentatif d'une forte dépression, de sorte que les vibrations de l'extrémité libre de la lèvre élastique peuvent, à ces emplacements, avoir une grande amplitude. Il est donc avantageux d'appliquer le joint conforme à la présente invention au moins en regard desdites parties d'extrados auxquelles la valeur du coefficient de pression est fortement négative.

Bien entendu, la hauteur de chaque bossage et le nombre desdits bossages, ainsi que la répartition de ceux-ci, sont déterminés, par calcul ou par expérience, pour que le débit de la fuite d'air résultant de la présence du ou des bossages engendre peu de traînée parasite, tout en assurant un faible niveau de vibrations de la lèvre du joint.

On remarquera que l'étanchéité, sur un aéronef, est un souci permanent des avionneurs, car une mauvaise étanchéité peut être source de traînée aérodynamique ou de dégradation de matériau, par oxydation par exemple. Pour ces raisons, l'homme du métier cherche toujours à obtenir la meilleure étanchéité possible de tout espace présentant un risque de fuite, et ceci, notamment par des dispositifs spécifiques à la géométrie de l'espace à combler (pâte silicone, joint de forte raideur, joint dont la forme précise s'adapte à l'espace à combler, ...). Par exemple, le document FR-A-2 789 144 décrit un tel joint d'étanchéité pour panneaux aéronautiques.

Ainsi, la présente invention se détourne de l'état antérieur de la technique et organise une fuite d'air à débit contrôlé, pour remédier à un défaut d'étanchéité.

La présente invention concerne également un joint pour un aéronef comportant :
- un fuselage et une voilure fixe comprenant deux ailes opposées par rapport audit fuselage ; et
- un carénage ventral en forme de berceau, fixé à la partie inférieure dudit fuselage, au croisement de ce dernier avec ladite voilure et pourvu de deux rebords longitudinaux remontant latéralement le long dudit fuselage, lesdits rebords longitudinaux étant pourvus, chacun, d'une ouverture pour le passage avec jeu de l'aile correspondante de sorte qu'est formée une fente périphérique autour de chaque aile, entre celle-ci et la périphérie de l'ouverture correspondante,
ledit joint étant apte à être fixé à la périphérie de chaque ouverture pour obturer ladite fente et comportant une lèvre élastique apte à s'appliquer, par la face interne de son extrémité libre, contre l'aile correspondante et étant remarquable en ce que ladite face interne de l'extrémité libre de ladite lèvre comporte au moins un bossage de butée, apte à maintenir ladite lèvre écartée de l'extrados de l'aile pour ménager une fuite contrôlée de l'air passant à travers ladite fente.

De façon connue, ledit joint peut comporter sur sa face interne, entre l'extrémité libre de ladite lèvre et son extrémité destinée à être fixée audit carénage, un organe d'étanchéité supplémentaire apte à s'appliquer contre l'aile correspondante. Bien entendu, de façon identique à ce qui a été dit ci-dessus pour ladite lèvre, ledit organe d'étanchéité supplémentaire peut, en vol, être amené à se décoller de l'aile correspondante sous l'action de la circulation d'air entre l'intrados et l'extrados, à travers ladite fente périphérique. Là encore, grâce à la présence des bossages sur la face interne de l'extrémité libre de la lèvre élastique, on peut contrôler les fuites de l'air traversant ladite fente.

Avantageusement, ledit organe d'étanchéité supplémentaire peut se présenter sous la forme d'un tube longitudinal radialement élastique. Ainsi, lorsque le joint est appliqué sur la voilure de l'aéronef, le tube, en venant en appui contre une aile, se déforme et s'aplatit, offrant une large surface d'appui.

Ledit joint peut de plus comporter un évidement longitudinal en forme de lame, prévu sur sa face externe, du côté de l'extrémité du joint destinée à être fixée au carénage, et apte à servir de logement à la périphérie de l'ouverture correspondante du carénage. Ainsi, ledit joint peut assurer la continuité aérodynamique entre le carénage et l'aile.

Ledit joint est avantageusement réalisé sous la forme d'un profilé monolithique, par exemple en une matière élastomère, éventuellement armée de fibres.

Les figures du dessin annexé feront bien comprendre comment l'invention peut être réalisée. Sur ces figures, des références identiques désignent des éléments semblables.
La figure 1 est une vue schématique en perspective du dessous d'un aéronef pourvu d'un carénage ventral.
La figure 2 est une vue schématique en perspective du dessus dudit carénage ventral, séparé dudit aéronef et épuré des éléments internes qui le composent.
La figure 3 est une vue latérale schématique, à plus grandes échelle, du carénage ventral monté sur l'aéronef et traversé par une aile, avant mise en place du joint conforme à la présente invention.
La figure 4 représente en perspective du dessus un joint conforme à l'invention, non encore fixé sur le carénage ventral.
La figure 5 représente, en coupe transversale agrandie, le joint conforme à l'invention, installé sur un carénage ventral pour obturer la fente entre celui-ci et l'aile correspondante.
La figure 6 correspond à une vue de face selon la flèche VI de la figure 5.

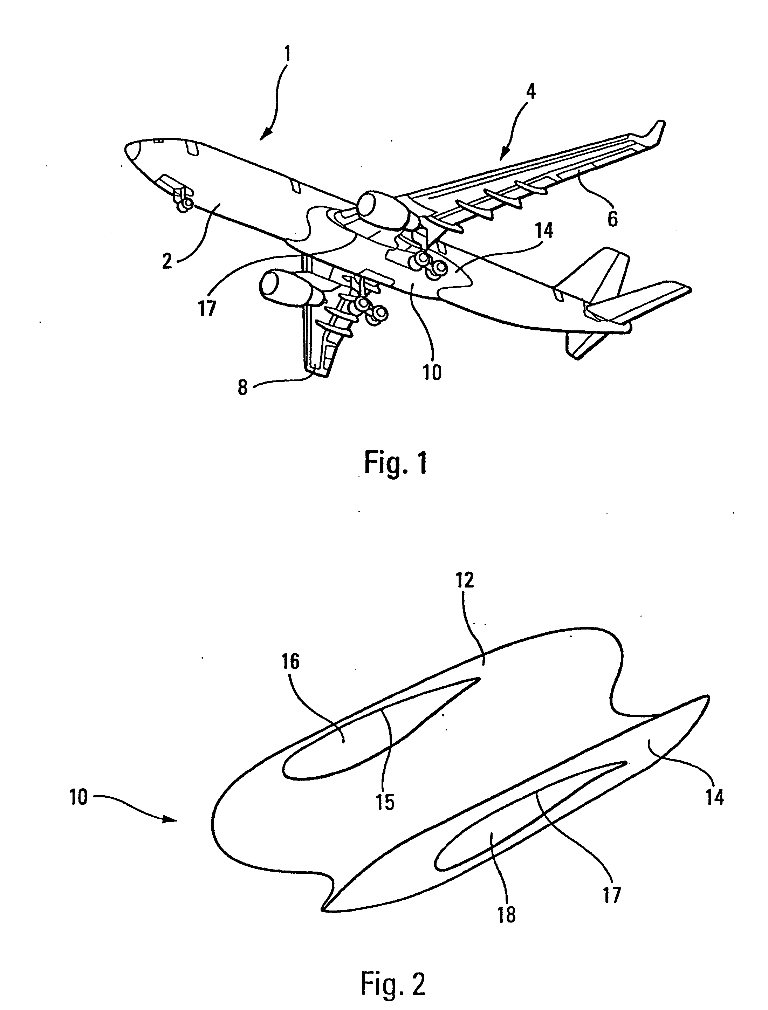

L'aéronef 1 représenté schématiquement sur la figure 1 comporte, de façon connue, un fuselage 2, une voilure fixe 4 comprenant deux ailes 6 et 8 opposées par rapport audit fuselage 2, un carénage ventral 10 en forme de berceau qui est fixé à la partie inférieure dudit fuselage 2, au croisement de ce dernier avec ladite voilure 4, et qui fait saillie par rapport au ventre dudit aéronef. Un tel berceau possède deux rebords longitudinaux 12 et 14 remontant latéralement le long dudit fuselage 2 (voir également la figure 2), lesdits rebords 12 et 14 étant pourvus, chacun, d'une ouverture 16 ou 18 pour le passage de l'aile 6 ou 8 correspondante.

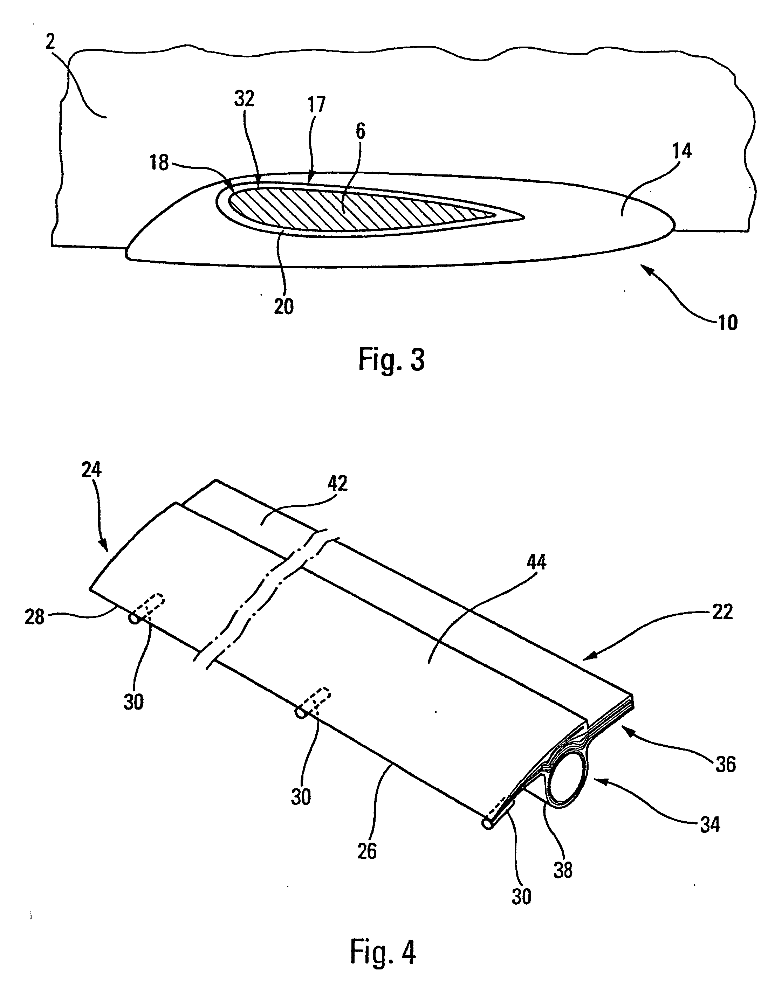

Après fixation du carénage ventral 10 sur le fuselage 2, il existe une fente périphérique 20 autour de chaque aile 6 et 8 entre celle-ci et la périphérie 15 ou 17 de l'ouverture 16 ou 18 correspondante, comme cela est représenté sur la figure 3.

Pour obturer ladite fente 20, on prévoit un joint 22, destiné à être fixé à la périphérie 15 et 17 de chaque ouverture 16 et 18. Un tel joint 22, qui se présente sous la forme d'un profilé monolithique, par exemple en un élastomère armé, comporte une lèvre élastique 24 apte à s'appliquer, par la face interne 26 de son extrémité libre 28 contre l'aile 6 ou 8 correspondante (voir la figure 4).

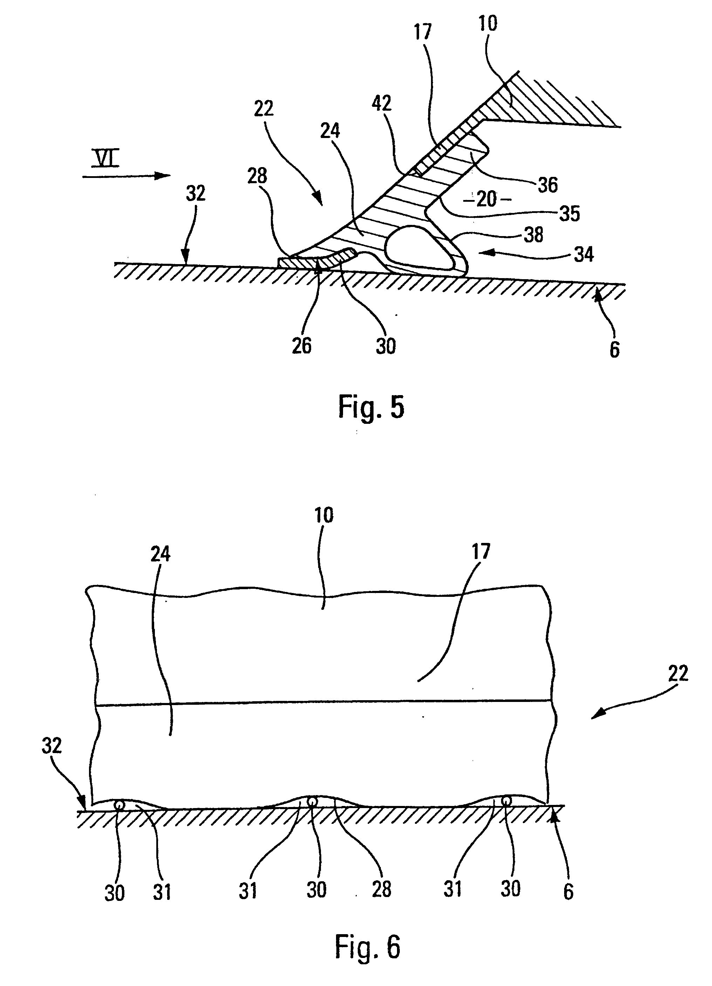

Conformément à l'invention, la face interne 26 de ladite lèvre 24 comporte des bossages de butée espacés 30, destinés à être positionnés en regard d'au moins une partie de l'extrados 32 de chaque aile 6 et 8. De tels bossages 30 maintiennent localement écartée dudit extrados 32 ladite extrémité 28 de la lèvre 24 pour ménager des espaces 31 organisant une fuite contrôlée de l'air passant à travers ladite fente 20 (voir les figures 5 et 6).

Afin de tenir compte du coefficient de pression sur l'extrados 32 des ailes 6, 8, le joint conforme à l'invention est notamment appliqué en regard des parties dudit extrados 32 où la valeur dudit coefficient est fortement négative.

La hauteur des bossages de butée 30, leur nombre et leur répartition le long de l'extrémité libre 28 sont déterminés pour que le débit de la fuite d'air à travers les espaces 31 engendre peu de traînée parasite, tout en assurant un faible niveau de vibrations pour la lèvre 24.

Le joint 22 conforme à l'invention peut de plus comporter un organe d'étanchéité supplémentaire 34, situé sur la face interne 35 dudit joint 22, entre l'extrémité libre 28 de la lèvre élastique 24 et l'extrémité 36 du joint destinée à être fixée au carénage ventral 10.

Dans le mode de réalisation représenté sur les figures 4 et 5, l'organe d'étanchéité 34 supplémentaire se présente sous la forme d'un tube longitudinal radialement élastique 38. Ainsi, lorsque le joint 22 est appliqué sur les ailes 6 et 8 de l'aéronef 1, le tube 38, venant en appui contre lesdites ailes, se déforme et s'aplatit, offrant une surface d'appui large, comme cela est représenté sur la figure 5.

Le joint 22 comporte un évidement longitudinal périphérique en forme de lame 42 situé sur la face externe 44 de ce dernier, du côté de l'extrémité 36 du joint 22 destinée à être fixée au carénage 10 et qui permet de loger le bord périphérique 15 ou 17 de l'ouverture 16 ou 18 sur lequel est fixé ledit joint, ce qui assure la continuité aérodynamique entre le carénage 10 et lesdites ailes 6 et 8.

Lorsque la pression de l'air circulant entre l'intrados et l'extrados des ailes 6 et 8, à travers la fente 20, atteint et dépasse une valeur de seuil, le tube 38 se décolle de l'extrados 32 et de l'air passe entre ce dernier et ledit tube 38. La fuite qui en résulte est calibrée et contrôlée par les espaces 31, ménagés par lesdits bossages 30, entre l'extrémité libre 28 de la lèvre 24 et ledit extrados 32.

## Revendications

1. Aéronef (1) comportant :
- un fuselage (2) et une voilure fixe (4) comprenant deux ailes (6, 8) opposées par rapport audit fuselage (2) ;
- un carénage ventral (10) en forme de berceau, fixé à la partie inférieure dudit fuselage (2), au croisement de ce dernier avec ladite voilure (4) et pourvu de deux rebords longitudinaux (12, 14) remontant latéralement le long dudit fuselage (2), lesdits rebords longitudinaux (12, 14) étant pourvus, chacun, d'une ouverture (16, 18) pour le passage avec jeu de l'aile (6, 8) correspondante de sorte qu'est formée une fente périphérique (20) autour de chaque aile (6, 8), entre celle-ci et la périphérie (15, 17) de l'ouverture (16, 18) correspondante ; et
- un joint (22) fixé à la périphérie (15, 17) de chaque ouverture (16, 18) pour obturer ladite fente (20) et comportant une lèvre élastique (24) apte à s'appliquer, par la face interne (26) de son extrémité libre (28), contre l'aile correspondante (6, 8),
**caractérisé en ce que**, en regard d'au moins une partie de l'extrados (32) de chaque aile (6, 8), ladite face interne (26) de l'extrémité libre (28) de ladite lèvre (24) comporte au moins un bossage de butée (30), apte à maintenir ladite lèvre localement écartée dudit extrados (32) pour ménager une fuite contrôlée de l'air passant à travers ladite fente (20).

2. Aéronef (1) selon la revendication 1,
**caractérisé en ce que** ledit joint (22) est appliqué au moins en regard des parties de l'extrados (32), auxquelles la valeur du coefficient de pression est fortement négative.

3. Joint (22) pour un aéronef (1) comportant :
- un fuselage (2) et une voilure fixe (4) comprenant deux ailes (6, 8) opposées par rapport audit fuselage (2) ; et
- un carénage ventral (10) en forme de berceau, fixé à la partie inférieure dudit fuselage (2), au croisement de ce dernier avec ladite voilure (4) et pourvu de deux rebords longitudinaux (12, 14) remontant latéralement le long dudit fuselage (2), lesdits rebords longitudinaux (12, 14) étant pourvus, chacun, d'une ouverture (16, 18) pour le passage avec jeu de l'aile (6, 8) correspondante de sorte qu'est formée une fente périphérique (20) autour de chaque aile (6, 8), entre celle-ci et la périphérie (15, 17) de l'ouverture (16, 18) correspondante,
ledit joint (22) étant apte à être fixé à la périphérie de chaque ouverture (16, 18) pour obturer ladite fente (20) et comportant une lèvre élastique (24) apte à s'appliquer, par la face interne (26) de son extrémité libre (28), contre l'aile correspondante (6, 8),
**caractérisé en ce que** ladite face interne (26) de l'extrémité libre (28) de ladite lèvre (24) comporte au moins un bossage de butée (30), apte à maintenir ladite lèvre localement écartée de l'extrados (32) de l'aile (6, 8) pour ménager une fuite contrôlée de l'air passant à travers ladite fente (20).

4. Joint (22) selon la revendication 3,
**caractérisé en ce qu'**il comporte sur sa face interne (35), entre l'extrémité libre (28) de ladite lèvre (24) et l'extrémité (36) du joint destinée à être fixée au carénage ventral (10), un organe d'étanchéité supplémentaire (34) apte à s'appliquer contre les ailes (6, 8).

5. Joint (22) selon la revendication 4,
**caractérisé en ce que** ledit organe d'étanchéité supplémentaire (34) est un tube longitudinal radialement élastique (38).

6. Joint (22) selon l'une des revendications 3 à 5,
**caractérisé en ce qu'**il comporte un évidement longitudinal en forme de lame (42) située sur la face externe (44) dudit joint (22), du côté de l'extrémité (36) de celui-ci apte à être fixée au carénage (10), ledit évidement (42) étant apte à servir de logement au bord périphérique (15, 17) de ladite ouverture (16, 18).

7. Joint (22) selon l'une des revendications 3 à 6,
**caractérisé en ce qu'**il se présente sous la forme d'un profilé monolithique.

## Patentansprüche

1. Flugzeug (1), aufweisend
- einen Flugzeugrumpf (2) und ein starres Tragwerk (4), das zwei Flügel (6, 8) umfasst, die im Verhältnis zum Flugzeugrumpf (2) einander gegenüberliegen;
- eine Flügel-Rumpf-Verkleidung (10) in Form einer Wiege, die an dem unteren Teil des Flugzeugrumpfes (2) befestigt ist, wo das Tragwerk (4) an den Flugzeugrumpf anschließt, und mit zwei Längsrändern (12, 14) versehen ist, die seitlich über die Länge des Flugzeugrumpfes (2) nach oben gezogen sind, wobei die Längsränder (12, 14) jeweils mit einer Öffnung (16, 18) für den Durchlass mit Spiel des entsprechenden Flügels (6, 8) ausgestattet sind, so dass um jeden Flügel (6, 8) herum, zwischen diesem und dem Umfang (15, 17) der entsprechenden Öffnung (16, 18), ein peripherer Spalt (20) entsteht,
- eine Dichtung (22), die am Umfang (15, 17) jeder Öffnung (16, 18) befestigt ist, um den Spalt (20) abzudichten, und eine elastische Lippe (24) aufweist, die in der Lage ist, mit der Innenseite (26) ihres freien Endes (28) an dem entsprechenden Flügel (6, 8) anzuliegen,
**dadurch gekennzeichnet, dass** die Innenseite (26) des freien Endes (28) der Lippe (24) gegenüber zumindest einem Teil der Oberseite (32) jedes Flügels (6, 8) mindestens einen Anschlagkörper (30) aufweist, der in der Lage ist, die Lippe örtlich von der Flügeloberseite (32) entfernt zu halten, um ein gesteuertes Entweichen der Luft herbeizuführen, die durch den Spalt (20) strömt.

2. Flugzeug (1) gemäß Anspruch 1,
**dadurch gekennzeichnet, dass** die Dichtung (22) zumindest gegenüber der Teile der Flügeloberseite (32), wo der Wert des Druckkoeffizienten stark negativ ist, angebracht wird.

3. Dichtung (22) für ein Flugzeug (1), aufweisend
- einen Flugzeugrumpf (2) und ein starres Tragwerk (4), das zwei Flügel (6, 8) umfasst, die im Verhältnis zum Flugzeugrumpf (2) einander gegenüberliegen; und
- eine Flügel-Rumpf-Verkleidung (10) in Form einer Wiege, die an dem unteren Teil des Flugzeugrumpfes (2) befestigt ist, wo das Tragwerk (4) an den Flugzeugrumpf anschließt, und mit zwei Längsrändern (12, 14) versehen ist, die seitlich über die Länge des Flugzeugrumpfes (2) nach oben gezogen sind, wobei die Längsränder (12, 14) jeweils mit einer Öffnung (16, 18) für den Durchlass mit Spiel des entsprechenden Flügels (6, 8) ausgestattet sind, so dass um jeden Flügel (6, 8) herum, zwischen diesem und dem Umfang (15, 17) der entsprechenden Öffnung (16, 18), ein peripherer Spalt (20) entsteht,
wobei die Dichtung (22) am Umfang jeder Öffnung (16, 18) befestigbar ist, um den Spalt (20) abzudichten, und eine elastische Lippe (24) aufweist, die in der Lage ist, mit der Innenseite (26) ihres freien Endes (28) an dem entsprechenden Flügel (6, 8) anzuliegen,
**dadurch gekennzeichnet, dass** die Innenseite (26) des freien Endes (28) der Lippe (24) mindestens einen Anschlagkörper (30) aufweist, der in der Lage ist, die Lippe örtlich von der Oberseite (32) des Flügels (6, 8) entfernt zu halten, um ein gesteuertes Entweichen der Luft herbeizuführen, die durch den Spalt (20) strömt.

4. Dichtung (22) gemäß Anspruch 3,
**dadurch gekennzeichnet, dass** sie an ihrer Innenseite (35), zwischen dem freien Ende (28) der Lippe (24) und dem Ende (36) der Dichtung, das dazu bestimmt ist, an der Flügel-Rumpf-Verkleidung (10) befestigt zu werden, ein zusätzliches Dichtelement (34) aufweist, das in der Lage ist, an den Flügeln (6, 8) anzuliegen.

5. Dichtung (22) gemäß Anspruch 4,
**dadurch gekennzeichnet, dass** das zusätzliche Dichtelement (34) ein längliches, radial elastisches Rohr (38) ist.

6. Dichtung (22) gemäß einem der Ansprüche 3 bis 5,
**dadurch gekennzeichnet, dass** sie eine längliche Aussparung in Form einer Klinge (42) aufweist, die sich an der Außenseite (44) der Dichtung (22) befindet, an dem Ende (36) der Dichtung, das in der Lage ist, an der Verkleidung (10) befestigt zu werden, wobei die Aussparung (42) in der Lage ist, zur Aufnahme des Außenrands (15, 17) der Öffnung (16, 18) zu dienen.

7. Dichtung (22) gemäß einem der Ansprüche 3 bis 6,
**dadurch gekennzeichnet, dass** sie die Form eines monolithischen Profils aufweist.

## Claims

1. Aircraft (1) comprising:
- a fuselage (2) and a fixed wing structure (4) comprising two wings (6, 8) which are opposed with respect to said fuselage (2);
- a ventral fairing (10) in the form of a cradle, fixed to the underside of said fuselage (2), where the latter meets said wing structure (4), and provided with two longitudinal upstands (12, 14) reaching up the sides of said fuselage (2), said longitudinal upstands (12, 14) each being provided with an opening (16, 18) for the passage, with clearance, of the corresponding wing (6, 8) so that a peripheral slot (20) is formed around each wing (6, 8), between the wing and the periphery (15, 17) of the corresponding opening (16, 18); and
- a seal (22) fixed to the periphery (15, 17) of each opening (16, 18) to plug said slot (20) and comprising an elastic lip (24) able, via the internal face (26) of its free end (28), to press against the corresponding wing (6, 8),
**characterized in that**, facing at least part of the suction face side (32) of each wing (6, 8), said internal face (26) of the free end (28) of said lip (24) comprises at least one abutment boss (30) able to keep said lip locally away from said suction face side (32) so as to form a controlled leakage of air passing through said slot (20).

2. Aircraft (1) according to Claim 1,
**characterized in that** said seal (22) is applied at least facing those parts of the suction face side (32) at which the value of the coefficient of pressure is highly negative.

3. Seal (22) for an aircraft (1) comprising:
- a fuselage (2) and a fixed wing structure (4) comprising two wings (6, 8) which are opposed with respect to said fuselage (2); and
- a ventral fairing (10) in the form of a cradle, fixed to the underside of said fuselage (2), where the latter meets said wing structure (4), and provided with two longitudinal upstands (12, 14) reaching up the sides of said fuselage (2), said longitudinal upstands (12, 14) each being provided with an opening (16, 18) for the passage, with clearance, of the corresponding wing (6, 8) so that a peripheral slot (20) is formed around each wing (6, 8), between the wing and the periphery (15, 17) of the corresponding opening (16, 18),
said seal (22) being able to be fixed to the periphery of each opening (16, 18) to plug said slot (20) and comprising an elastic lip (24) able, via the internal face (26) of its free end (28), to press against the corresponding wing (6, 8),
**characterized in that**, said internal face (26) of the free end (28) of said lip (24) comprises at least one abutment boss (30) able to keep said lip locally away from the suction face side (32) of the wing (6, 8) so as to form a controlled leakage of air passing through said slot (20).

4. Seal (22) according to Claim 3,
**Characterized in that** it comprises, on its internal face (35), between the free end (28) of said lip (24) and the end (36) of the seal that is intended to be fixed to the ventral fairing (10), an additional sealing member (34) able to press against the wings (6, 8).

5. Seal according to Claim 4,
**characterized in that** said additional sealing member (34) is a radially elastic longitudinal tube (38).

6. Seal (22) according to of Claims 3 to 5,
**characterized in that** comprises a longitudinal recess in the form of a strip (42) situated on the external face (44) of said seal (22) at the side of the end (36) thereof that is able to be fixed to the fairing (10), said recess (42) serving to house the peripheral edge (15, 17) of said opening (16, 18).

7. Seal (22) according to one of Claims 3 to 6,
**Characterized in that** it is in the form of a monolithic section piece.
